# EUROPÄISCHE PATENTSCHRIFT

(11) **EP 0 575 634 B1**
(45) Veröffentlichungstag und Bekanntmachung des Hinweises auf die Patenterteilung: **09.10.1996**
(21) Anmeldenummer: 92108781.3
(22) Anmeldetag: 25.05.1992
(51) Int. Cl.: G01L 1/22

(54) **Drehmomentsensor**
Torque sensor
Palpeur de couple

(43) Veröffentlichungstag der Anmeldung: 29.12.1993
(73) Patentinhaber: HOTTINGER BALDWIN MESSTECHNIK GMBH, D-64201 Darmstadt (DE)
(72) Erfinder: Nold, Werner, W-6086 Riedstadt (DE)
(74) Vertreter: Brandt, Ernst-Ulrich, Dipl.-Phys., Dipl.-Ing.

(56) Entgegenhaltungen:
- EP-A- 0 454 901
- DD-A- 281 727
- DE-A- 2 442 525
- DE-U- 8 210 190
- FR-A- 1 358 231
- US-A- 4 836 034
- US-A- 4 849 730
- PATENT ABSTRACTS OF JAPAN vol. 11, no. 42 (P-545)(2489) 6. Februar 1987 & JP-A-61213645

## Beschreibung

Die Erfindung betrifft einen Drehmomentsensor mit zwei durch Stege miteinander verbundenen Flanschen, mit mindestens vier Meßwertaufnehmern, die an mindestens zwei Stegen angeordnet sind, zum Detektieren von Dehnungen wobei eine erste Aufnehmergruppe mit mindestens zwei der Meßwertaufnehmer bei vorgegebener Drehrichtung einer positiven und die übrigen Meßwertaufnehmer, die eine zweite Aufnehmergruppe bilden, einer negativen Dehnung ausgesetzt sind, und wobei die Meßwertaufnehmer zu einer Meßbrücke verschaltet sind.

Derartige Sensoren sind beispielsweise in US-A-4 836 034 und US-A-4 849 730 offenbart. Bekannte derartige Drehmomentsensoren sehen vor, daß je zwei Dehnungsmeßstreifen an gegenüberliegenden Stegseiten in einem Bereich nahe eines der Flansche appliziert sind. Dadurch werden in den beiden Dehnungsmeßstreifen eines Steges dehnungsproportionale Signale mit entgegengesetzten Vorzeichen erzeugt, die in einer Brückenschaltung gemessen werden können.

Die Momenteneinleitung in eine solchen Meßvorrichtung erfolgt über Anschlußflansche, die mit den Flanschen des Drehmomentsensors verbunden werden. Bei den bekannten Drehmomentsensoren treten beim Verschrauben mit unterschiedlichen Anschlußflanschen nicht zu vernachlässigende Kennwertunterschiede auf. Zu einer Verfälschung des Meßwertes kann auch ein Verschrauben der Anschlußflansche mit nicht exakt gleichen Anzugsmomenten führen. Zur Vermeidung dieser Probleme werden daher oft die Flansche des Drehmomentsensors extrem überdimensioniert. Außerdem muß sehr stark auf exaktes Verschrauben sowie auf sehr genaue Herstellung der Anschlußbohrungen, insbesondere in Bezug auf die Lage der Anschlußbohrungen zu den Stegen, geachtet werden.

Eine Ausbildung der Flansche mit besonders großer Dicke ist jedoch aus rotationsdynamischen Gründen sehr unbefriedigend, da Probleme mit der biegekritischen Drehzahl vorprogrammiert sind und die Eigenfrequenzen der Drehmomentsensoren mit großer Wahrscheinlichkeit in den Nenn-Drehzahlbereich fallen.

Der Erfindung liegt daher die Aufgabe zugrunde, einen gattungsgemäßen Drehmomentsensor zu schaffen, der sich dadurch auszeichnet, daß durch das Verbinden mit unterschiedlichen Anschlußflanschen keine Kennwertunterschiede auftreten. Dabei soll der Drehmomentsensor einen möglichst geringen Außendurchmesser und ein geringes Massenträgheitsmoment bei gleichzeitig hoher Meßgenauigkeit aufweisen. Darüber hinaus soll der Drehmomentsensor unempfindlich gegen Verschrauben mit voneinander abweichenden Anzugsmomenten sein.

Diese Aufgabe wird erfindungsgemäß dadurch gelöst, daß die erste Aufnehmergruppe innerhalb eines dem ersten Flansch zugewandten und diesem benachbarten ersten Stegbereiches und die zweite Aufnehmergruppe innerhalb eines dem zweiten Flansch zugewandten und diesem benachbarten zweiten Stegbereiches angeordnet ist, und daß die Meßwertaufnehmer der ersten Aufnehmergruppe in zwei sich einander diagonal gegenüberliegenden Brückenzweigen der aus vier Brückenzweigen bestehenden Meßbrücke vorgesehen sind, während die Meßwertaufnehmer der zweiten Aufnehmergruppe innerhalb der beiden anderen sich ebenfalls diagonal gegenüberliegenden Brückenzweige verschaltet sind.

Durch die erfindungsgemäße Lösung können Drehmomentsensoren mit großer Meßsicherheit ausgebildet werden, deren Eigenfrequenz mit Sicherheit außerhalb des Nenn-Drehzahlbereiches des Meßobjektes liegt, wobei Unterschiede im Anzugsmoment der Verschraubungen trotz dünner Flansche keine Beeinträchtigung des Meßergebnisses bzw. des Kennwertes ergeben.

Durch die Zuordnung der Meßwertaufnehmer zu den beiden Flanschen in Kombination mit der erfindungsgemäßen Verschaltung werden nämlich die Einflüsse der Momenteneinleitung in den Flansch stets kompensiert. Anfgrund des geringen Massenträgheitsmomentes eignen sich diese Drehmomentsensoren besonders für dynamische Messungen an rotierenden Wellen.

Eine bevorzugte Ausführungsform der Erfindung sieht vor, daß die Meßwertaufnehmer Biegedehnungen der Stege detektieren, wodurch eine hohe Meßempfindlichkeit des Meßkörpers erreicht wird, und somit kleine Drehmomente meßbar sind. Die Messung der Biegedehnung hat darüber hinaus den Vorteil, daß die Stege noch so stark dimensioniert sein können, daß sich die Applikation der Meßwertaufnehmer sehr gut bewerkstelligen läßt.

Die Biegedehnung der Stege kann dann besonders günstig ermittelt werden, wenn die Meßwertaufnehmer auf einer derjenigen Seiten der Stege appliziert sind, die zu der gemeinsamen Ebene der Sensor- und der betreffenden Steglängsachse im wesentlichen parallel ist. Zur Kompensation von Querkräften- und momenten ist es besonders günstig, wenn alle Stege mit mindestens zwei Meßwertaufnehmern bestückt sind.

Eine maximale Kompensation der Störgrößen bei der Momenteneinleitung läßt sich erreichen, wenn alle Stege beidseitig mit je zwei Meßwertaufnehmern bestückt sind, wobei die Meßwertaufnehmer im erfindungsgemäßen Sinne verschaltet sind.

Zur Erhöhung der Linearität und Verbesserung der Hystereseeigenschaft ist es von Vorteil, wenn der erste und der zweite Stegbereich jeweils als gelenkartiger Abschnitt geringeren Widerstandsmomentes ausgebildet ist, und zwischen diesen beiden Abschnitten ein in Umfangsrichtung stärker dimensionierter Mittelabschnitt liegt.

Zur hochgenauen Messung von Drehmomenten eignet sich besonders eine Erfindungsausführung, bei der die beiden Flansche koaxial und parallel zueinander verlaufen, wobei sie axial voneinander beabstandet sind, da sich auf diese Weise exakt gleiche Flanschdurchmesser zur Momenteneinleitung realisieren lassen.

Soll eine besonders geringe Bauhöhe erreicht werden, so ist es von Vorteil, daß ein Flansch als Innennabe vorgesehen ist, die von dem zweiten konzentrischen Flansch radial umgeben ist. Um dabei einen großen Durchmesser für die Verbindung von Anschlußflanschen an der Innennabe zu erreichen, ist vorgesehen, daß die Innennabe radiale, sich in den Zwischenraum zwischen den Stegen hinein erstreckende Fortsätze aufweist.

Weitere vorteilhafte Merkmale sowie die Funktion der Erfindung ergeben sich aus der nachstehenden Beschreibung von Ausführungsbeispielen anhand der Zeichnung.

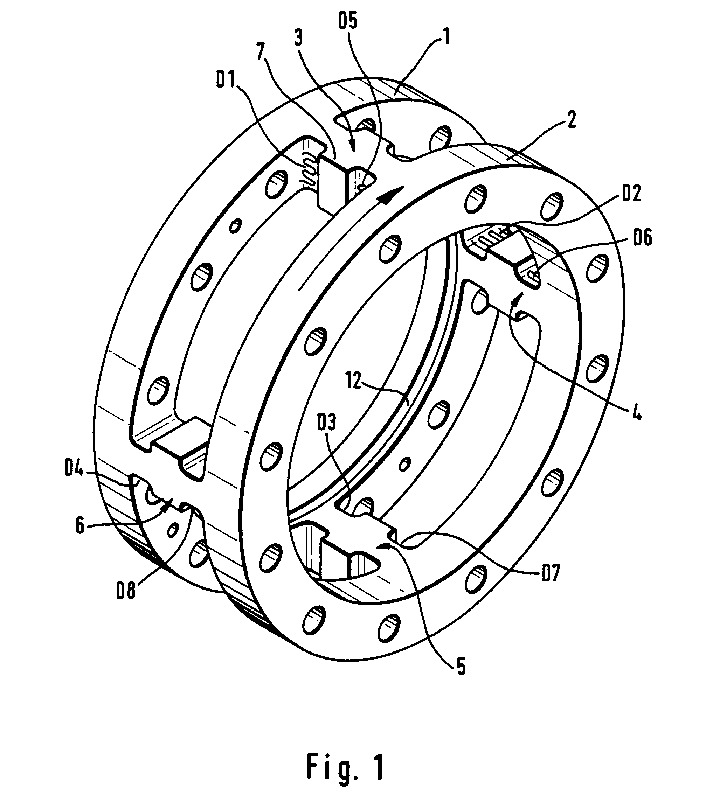

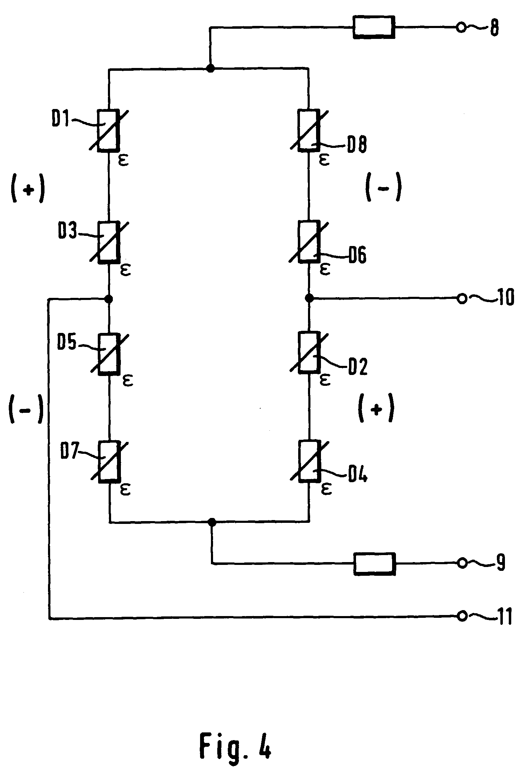

Hierzu zeigt Figur 1 bis 3 jeweils in perspektivischer Darstellung eine erste, zweite bzw. dritte Ausführungsform der Erfindung, Figur 4 zeigt eine Verschaltung der Meßwertaufnehmer zur einer Meßbrücke.

Figur 1 zeigt einen Drehmomentsensor mit zwei voneinander beabstandeten koaxialen Flanschen 1 und 2 gleichen Durchmessers. Der erste Flansch 1 und der zweite Flansch 2 stehen über vier Stege 3 bis 6 miteinander in Verbindung. Jeder der Flansche 1 und 2 besitzt gleichmäßig am Umfang verteilte Bohrungen, die der Verschraubung mit geeigneten, nicht dargestellten Anschlußflanschen zur Momenteneinleitung dienen. Die Verteilung der Stege 3 bis 6 ist ebenfalls regelmäßig am Umfang der Flansche.

Die Stege 3 bis 6 verlaufen senkrecht zu den Radialebenen der Flansche 1 und 2. Die Mittelabschnitte 7 der Stege 3 bis 6 sind in Umfangsrichtung verstärkt ausgebildet, so daß die Übergangsbereiche der Stege in den Flansch jeweils "flexible" Gelenke bilden. Auf diese Weise werden die beim Tordieren des Sensors um seine Längsachse auftretenden Verformungen der Stege in diese Gelenke konzentriert, wodurch Zonen hoher und homogener Verformung definiert werden.

In der Figur ist durch den Pfeil auf dem zweiten Flansch ein rechtsdrehendes Torsionsmoment angedeutet. Auf jedem Gelenk der Stege 3 bis 6 ist auf der dem genannten Pfeil entgegengerichteten senkrecht zur Umfangsrichtung stehenden Stegseite ein Dehnungsmeßstreifen appliziert. Und zwar sind auf den dem ersten Flansch 1 zugeordneten Gelenken in Pfeilrichtung umlaufend die Dehnungsmeßstreifen D 1, D 2, D 3 und D 4 appliziert, während auf den dem zweiten Flansch 2 zugeordneten Gelenke der Stege 1 bis 6 die Dehnungsmeßstreifen D 5 bis D 8 befestigt sind. Die Meßgitter der Dehnungsmeßstreifen D 1 bis D 8 verlaufen dabei parallel zur Längsachse der Stege.

Wird nun ein rechtsdrehendes Torsionsmoment über die Flansche 1 und 2 eingeleitet, so erfahren die dem ersten Flansch zugeordneten Dehnungsmeßstreifen D 1 bis D 4 eine Dehnung, während die den zweiten Flansch 2 zugeordneten Dehnungsmeßstreifen D 5 bis D 8 einer Stauchung ausgesetzt sind.

Die Figur 4 zeigt eine Meßbrücke, in der die genannten Dehnungsmeßstreifen D 1 bis D 8 verschaltet sind. Bei dieser Meßbrücke wird an den Anschlußpunkten 8 und 9 die Brückenspeisespannung angelegt und zwischen den Anschlußpunkten 10 und 11 das Ausgangssignal abgegriffen. Der Brückenzweig zwischen den Anschlußpunkten 8 und 11 trägt die Dehnungsmeßstreifen D 1 und D 3, während die anderen beiden dem ersten Flansch zugeordneten Dehnungsmeßstreifen D 2 und D 4 im diagonal gegenüberliegenden Brückenzweig zwischen den Anschlußpunkten 9 und 10 vorgesehen sind. Die dem zweiten Flansch 2 zugeordneten Dehnungsmeßstreifen D 5 und D 7 bzw. D 6 und D 8 liegen in den einander gegenüberliegenden Brückenzweigen zwischen den Anschlußpunkten 9 und 11 bzw. 8 und 10.

Ist nun beispielsweise der mit dem zweiten Flansch 2 verbundene Anschlußflansch weicher als der mit dem ersten Flansch verbundene, so kann ein Teil der torsionsbedingten Veformung bereits im Flansch 2 bzw. dem mit ihm verbundenen Anschlußflansch auftreten, so daß die von den Dehnungsmeßstreifen D 5 bis D 8 sensierte Biegedehnung anteilsmäßig verringert ist. Die Verformung der Stege wird dadurch unsymmetrisch zum Stegmittelpunkt. Der auf den jeweiligen Steg bezogene Belastungsfall liegt mit anderen Worten zwischen dem des beidseitig eingespannten und dem des einseitig eingespannten Biegebalkens, je nachdem, wie sehr die Festigkeiten der beiden Flansche voneinander abweichen.

Da diese verringerten Dehnungen jedoch untereinander vorzeichengleich sind, und da sich die Verformung der gegenüberliegenden Endbereiche eines Steges um diesen Anteil erhöht, wird dieser durch die Verformung des weicheren Flansches bedingte Fehler automatisch kompensiert, da die sich in Steglängsrichtung gegenüberliegenden Dehnungsmeßstreifen jedes Steges in benachbarten Brückenzweigen vorgesehen sind. Somit werden beide Brückenhälften gleichsinnig und betragsgleich verstimmt; die Vollbrücke jedoch bleibt dabei abgeglichen.

Durch diese automatische Kompensation können also solche Verformungen der Flansche zugelassen werden, wodurch sich Sensoren mit relativ gering dimensionierten Flanschen ausbilden lassen. Der erfindungsgemäße Drehmomentsensor eignet sich besonders zum hochdynamischen Messen bei hohen Drehzahlen, wobei die Übertragung des Ausgangssignales beispielsweise durch eine induktive Kopplung mittels Übertragerspulen erfolgt.

Die Brückenverschaltung gemäß Figur 4 kann dabei in einen der Flansche, im Ausführungsbeispiel ist dies der erste Flansch, integriert werden, wozu dieser erste Flansch 1 mit einer an der radial innenliegenden Fläche umlaufenden Nut 12 versehen ist, in welche die Verschaltung, beispielsweise auf einer Folie aufgebaut, installiert werden kann. Auf diese Weise ist die Schaltung auch gegen Ablösen aufgrund von Zentrifugalkräften geschützt.

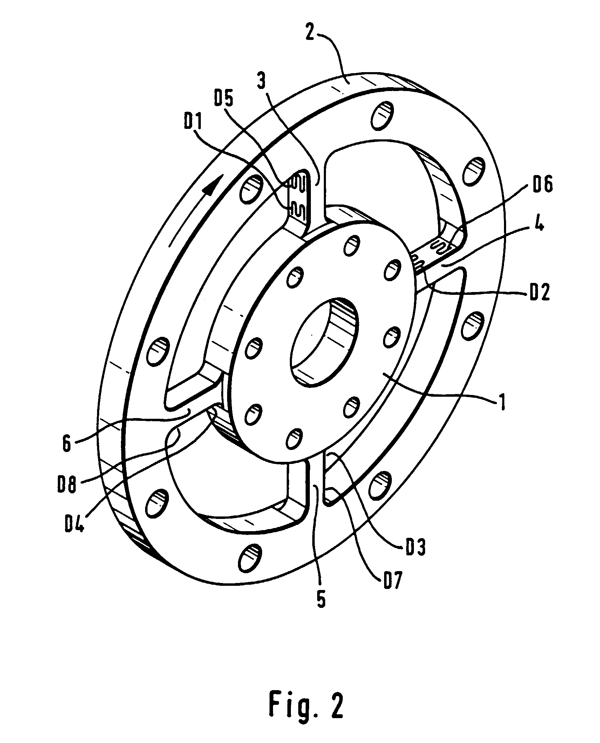

In Figur 2 ist eine weitere Ausführungsform der Erfindung dargestellt, bei deren Beschreibung für einander entsprechende Teile die selben Bezugszeichen wie in Figur 1 verwandt werden. Bei diesem Ausführungsbeispiel ist der erste Flansch 1 als Innennabe ausgeführt, die von einem sie radial konzentrisch umgebenden zweiten Flansch 2 umgriffen ist. Die beiden Flansche 1, 2 sind durch vier gleichmäßig am Umfang verteilte radial verlaufende Stege 3 bis 6 miteinander verbunden. Auch bei diesem Ausführungsbeispiel sind die Flansche mit Durchgangs- oder Gewindebohrungen zur Verschraubung mit entsprechenden Anschlußflanschen versehen.

Die Stege 3 bis 6 weisen im Ausführungsbeispiel gemäß Figur 2 zwar einen konstanten Querschnitt entlang ihrer Längsachsen auf, jedoch könnten auch bei einer derartigen Ausführung die Stegmittelabschnitte ähnlich wie in Figur 1 eine sich in Umfangsrichtung erstreckende Verdickung aufweisen. Auf den dem Umfangspfeil entgegengerichteten Stegseiten sind entsprechend der Ausführung gemäß Figur 1 Dehnungsmeßstreifen appliziert, wobei die Dehnungsmeßstreifen D 1 bis D 4 innerhalb eines dem ersten Flansch 1 benachbarten Stegabschnittes angeordnet sind, während die Dehnungsmeßstreifen D 5 bis D 8 am gegenüberliegenden Endabschnitt des jeweiligen Steges befestigt sind.

Die Dehnungsmeßstreifen D 1 bis D 8 sind gemäß Figur 4 verschaltet, so daß auch die Funktionsweise dieser Ausführung derjenigen der oben beschriebenen entspricht.

Um eine Beeinträchtigung der Verformung der Stege durch die Anschlußflansche zu verhindern, ist die Innennabe 1 axial in die eine Richtung, d. h. in der Figur nach vorne, und der zweite Flansch 2 in die andere Richtung, d. h. in der Zeichnung nach hinten, verlängert, so daß jeweils ein umlaufender Absatz zwischen dem entsprechenden Flansch und den Stegen entsteht.

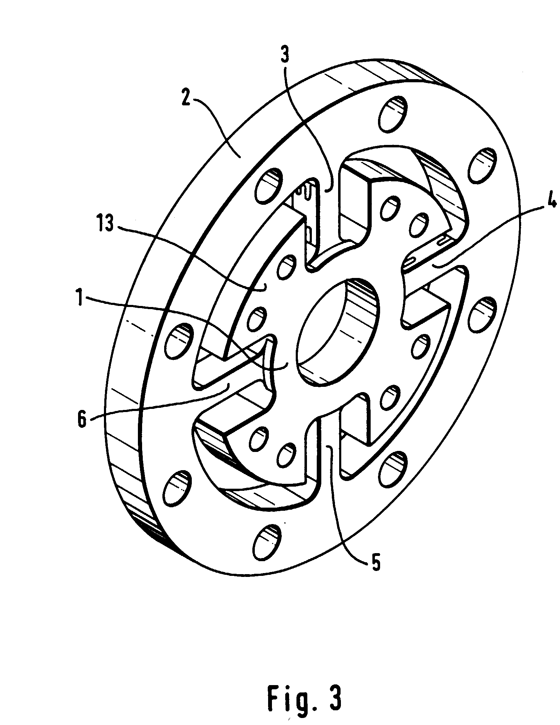

Figur 3 zeigt eine Ausführungsform der Erfindung, welche den gleichen Grundaufbau wie das Ausführungsbeispiel gemäß Figur 2 aufweist. Im Unterschied hierzu sind jedoch im Bereich zwischen den Stegen 3 bis 6 vier sich radial erstreckende Fortsätze 13 ausgebildet. Diese Fortsätze 13 tragen die Anschlußbohrungen zur Befestigung eines Anschlußflansches, wodurch ein größerer Teilkreis zur Verschraubung von Flansch 1 entsteht. Die Fortsätze 13 haben etwa den Querschnitt eines Kreisringstückes, durch die Bemessung des Abstandes zwischen den Fortsätzen 13 und den Stegen 3 bis 6 können diese Fortsätze auch als Überlastsicherung dienen, die dann wirksam wird, wenn die Stegverformung, d. h. die Verdrehung der Flansche gegeneinander, ein Höchstmaß erreicht hat.

Durch die Verlagerung des Momenteneinleitungsortes am ersten Flansch 1 radial nach Außen wird zwar der Kraftfluß "um die Ecke" geführt, wodurch zwangsläufig das Biegemoment in die radial nach innen gerichteten Endabschnitte der Stege 3 bis 6 deutlich anders eingeleitet wird als dies gemäß Figur 2 erfolgt. Jedoch läßt sich gerade diese unterschiedliche Krafteinleitung am Innenflansch gegenüber dem Außenflansch durch die erfindungsgemäße automatische Kompensation ganz hervorragend und ohne weiteren Aufwand kompensieren. Auch bei diesem Ausführungsbeispiel ragt die Stirnseite des ersten Flansches axial in die eine Richtung und die Sirnseite des zweiten Flansches in die andere Richtung über die Stege hinaus.

Selbstverständlich läßt sich die Erfindung nicht nur bei der Drehmomentmessung an drehenden, sondern auch bei der Messung an stehenden Wellen einsetzen.

## Patentansprüche

1. Drehmomentsensor mit zwei durch Stege miteinander verbundenen und zueinander parallelen Flanschen (1, 2) mit mindestens vier Meßwertaufnehmern zum Detektieren von Dehnungen, die an mindestens zwei Stegen (3 bis 6) derart angeordnet sind, daß eine erste Aufnehmergruppe mit mindestens zwei der Meßwertaufnehmer bei vorgegebener Drehmomentrichtung um eine Achse normal auf die Ebene der Flansche einer positiven und die übrigen Meßwertaufnehmer, die eine zweite Aufnehmergruppe bilden, einer negativen Dehnung ausgesetzt sind und wobei die Meßwertaufnehmer zu einer Meßbrücke verschaltet sind, dadurch gekennzeichnet, daß die erste Aufnehmergruppe (D 1 bis D 4) innerhalb eines dem ersten Flansch (1) zugewandten und diesem benachbarten Stegbereiches und die zweite Aufnehmergruppe (D 5 bis D 8) innerhalb eines dem zweiten Flansch (2) zugewandten und diesem benachbarten zweiten Stegbereiches angeordnet sind und daß die Meßwertaufnehmer (D 1 bis D 4) der ersten Aufnehmergruppe in zwei einander diagonal gegenüberliegenden Brückenzweigen der aus vier Brückenzweigen bestehenden Meßbrücke vorgesehen sind, während die Meßwertaufnehmer (D 5 bis D 8) der zweiten Aufnehmergruppe innerhalb der beiden anderen ebenfalls einander diagonal gegenüberliegenden Brückenzweigen verschaltet sind.

2. Drehmomentsensor nach Anspruch 1, dadurch gekennzeichnet, daß die Meßwertaufnehmer (D 1 bis D 8) Biegedehnungen der Stege (3 bis 6) detektieren.

3. Drehmomentsensor nach Anspruch 2, dadurch gekennzeichnet, daß die Meßwertaufnehmer (D 1 bis D 8) auf einer derjenigen Seiten der Stege (3 bis 6) appliziert sind, die zu der gemeinsamen Ebene der Sensor- und der betreffenden Steglängsachse im wesentlichen parallel sind.

4. Drehmomentsensor nach einem der vorhergehenden Ansprüche, dadurch gekennzeichnet, daß alle Stege (3 bis 6) mit mindestens zwei Meßwertaufnehmern (D 1, D 5; D 2, D 6; D 3, D 7; D 4, D 8) bestückt sind.

5. Drehmomentsensor nach Anspruch 4, dadurch gekennzeichnet, daß alle Stege (3 bis 6) beidseitig mit je zwei Dehnungsmeßstreifen bestückt sind.

6. Drehmomentsensor nach einem der vorhergehenden Ansprüche, dadurch gekennzeichnet, daß der erste und der zweite Stegbereich jeweils als gelenkartiger Abschnitt geringeren Widerstandsmomentes ausgebildet ist, und daß zwischen diesen Abschnitten ein in Umfangsrichtung stärker dimensionierter Mittelabschnitt (7) liegt.

7. Drehmomentsensor nach einem der vorhergehenden Ansprüche, dadurch gekennzeichnet, daß die beiden Flansche (1, 2) koaxial und parallel zueinander verlaufen, wobei sie axial voneinander beabstandet sind.

8. Drehmomentsensor nach einem der Ansprüche 1 bis 6, dadurch gekennzeichnet, daß ein Flansch als Innennabe (1) vorgesehen ist, die von dem zweiten konzentrischen Flansch (2) radial umgeben ist.

9. Drehmomentsensor nach Anspruch 8, dadurch gekennzeichnet, daß die Innennabe (1) radiale, sich in den Zwischenraum zwischen den Stegen (3 bis 6) hinein erstreckende Fortsätze (13) aufweist.

## Claims

1. Torque sensor with two flanges (1,2) which are connected to one another by webs and are parallel to one another, with at least four measured value sensors for detecting extensions, which sensors are disposed on at least two webs (3 to 6) in such a way that with a predetermined torque direction about an axis normal to the plane of the flanges a first sensor group with at least two of the measured value sensors is subjected to a positive extension and the remaining measured value sensors, which form a second sensor group, are subjected to a negative extension, and wherein the measured value sensors are connected into a measuring bridge, characterised in that the first sensor group (D1 to D4) is disposed within a web region which is facing the first flange (1) and adjacent thereto and the second sensor group (D5 to D8) is disposed within a second web region which is facing the second flange (2) and adjacent thereto, and that the measured value sensors (D1 to D4) of the first sensor group are provided in two diagonally opposing bridge branches of the measuring bridge which consists of four bridge branches, whilst the measured value sensors (D5 to D8) of the second sensor group are connected within the two other bridge branches which are likewise diagonally opposite one another.

2. Torque sensor according to Claim 1, characterised in that the measured value sensors (D1 to D8) detect extensions on bending of the webs (3 to 6).

3. Torque sensor according to Claim 2, characterised in that the measured value sensors (D1 to D8) are applied on one of those sides of the webs (3 to 6) which are substantially parallel to the common plane of the sensor axis and the relevant longitudinal axis of a web.

4. Torque sensor according to one of the preceding claims, characterised in that all webs (3 to 6) are equipped with at least two measured value sensors (D1, D5; D2; D6; D3, D7; D4, D8).

5. Torque sensor according to Claim 4, characterised in that all webs (3 to 6) are equipped on both sides with two strain gauges each.

6. Torque sensor according to one of the preceding claims, characterised in that the first and the second web regions are each constructed as a joint-like portion with a lower moment of resistance, and that that a central portion (7) of greater dimensions in the circumferential direction lies between these portions.

7. Torque sensor according to one of the preceding claims, characterised in that the two flanges (1, 2) extend coaxially and parallel to one another and are axially spaced from one another.

8. Torque sensor according to one of Claims 1 to 6, characterised in that one flange is provided as an inner hub (1) which is radially surrounded by the second concentric flange (2).

9. Torque sensor according to Claim 8, characterised in that the inner hub (1) has radial projections (13) which extend into the space between the webs (3 to 6).

## Revendications

1. Détecteur de couple de rotation avec deux brides (1, 2), parallèles entre elles, reliées entre elles par des entretoises, avec au moins quatre capteurs de valeur de mesure pour la détection d'allongements, qui sont placés sur au moins deux entretoises (3 à 6) de manière qu'un premier groupe de capteurs avec au moins deux des capteurs de valeur de mesure pour un sens de couple de rotation (2) donné, est soumis à un allongement positif et les autres capteurs de valeur de mesure, qui forment un deuxième groupe de capteurs, sont soumis à un allongement négatif et les capteurs de valeur de mesure étant montés en un pont de mesure, caractérisé en ce que le premier groupe de capteurs (D1 à D4) est placé à l'intérieur d'une zone d'entretoise tournée vers la première bride (1) et voisine de celle-ci et le deuxième groupe de capteurs (D5 à D8) est placé à l'intérieur d'une deuxième zone d'entretoise tournée vers la deuxième bride (2) et voisine de celle-ci et en ce que les capteurs de valeur de mesure (D1 à D4) du premier groupe de capteurs sont prévus dans deux branches de pont diagonalement opposées l'une à l'autre du pont de mesure, constitué de quatre branches, tandis que les capteurs de valeur de mesure (D5 à D8) du deuxième groupe de capteurs sont montés à l'intérieur des deux autres branches de pont, également diagonalement opposées l'une à l'autre.

2. Détecteur de couple de rotation selon la revendication 1, caractérisé en ce que les capteurs de valeur de mesure (D1 à D8) détectent des allongements à la flexion des entretoises (3 à 6).

3. Détecteur de couple de rotation selon la revendication 2, caractérisé en ce que les capteurs de valeur de mesure (D1 à D8) sont appliqués sur l'un des côtés des entretoises (3 à 6) qui sont sensiblement parallèles au plan commun de l'axe longitudinal du capteur et de l'axe longitudinal d'entretoise concerné.

4. Détecteur de couple de rotation selon l'une des revendications précédentes, caractérisé en ce que toutes les entretoises (3 à 6) sont équipées d'au moins deux capteurs de valeur de mesure (D1, D5 ; D2, D6 ; D3, D7 ; D4, D8).

5. Détecteur de couple de rotation selon la revendication 4, caractérisé en ce que toutes les entretoises (3 à 6) sont équipées des deux côtés de deux bandes de mesure d'allongement.

6. Détecteur de couple de rotation selon l'une des revendications précédentes, caractérisé en ce que la première et la deuxième zone d'entretoise sont chacune une portion articulée de moments de résistance réduits, et entre ces portions se situe une portion centrale (7) plus fortement dimensionnée dans la direction périphérique.

7. Détecteur de couple de rotation selon l'une des revendications précédentes, caractérisé en ce que les deux brides (1, 2) sont coaxiales et parallèles entre elles et espacées axialement l'une de l'autre.

8. Détecteur de couple de rotation selon l'une des revendications 1 à 6, caractérisé en ce qu'une bride est prévue comme moyeu intérieur (1), qui est entouré radialement par la deuxième bride (2) concentrique.

9. Détecteur de couple de rotation selon la revendication 8, caractérisé en ce que le moyeu intérieur (1) présente des prolongements (13) radiaux, s'étendant dans l'espace intermédiaire compris entre les entretoises (3 à 6).
